# DEMANDE DE BREVET EUROPEEN

(11) **EP 1 761 101 A1**
(43) Date de publication de la demande: **07.03.2007**
(21) Numéro de dépôt: 06291382.7
(22) Date de dépôt: 31.08.2006
(51) Int. Cl.: H04Q 7/38

(54) **Système, procédé et serveur pour la redirection d'un appel dans un réseau de télécommunication**

(30) Priorité: 06.09.2005 FR 0509098; 16.09.2005 FR 0509507
(71) Demandeur: FRANCE TELECOM, 75015 Paris (FR)
(72) Inventeur: Coste-Martinez, Sophie, 22300 Lannion (FR); Chevalier, Yveline, 75015 Paris (FR); Pinatel, Boris, 75015 Paris (FR)
(74) Mandataire: Habasque, Etienne J. Jean-François

(57) **Abrégé**

L'invention concerne un système d'alerte, dans un réseau (1) de télécommunication, par un utilisateur appelant (U_{A}), d'un utilisateur destinataire appartenant à une communauté d'utilisateurs (U_{D1}, U_{D2}, U_{D3}) définie par un identifiant d'alerte, et ledit système comportant :
- un terminal (2) de télécommunication appartenant à l'utilisateur appelant et comportant des moyens (4) de génération activables au moyen d'une touche (3) prédéterminée, d'une requête de communication comportant ledit identifiant d'alerte,
- un serveur (5) de joignabilité connecté au réseau (1) de télécommunication pour recevoir cette requête de communication et comportant :

- des moyens (6) de réception du réseau (1) des coordonnées de localisation des terminaux connectés audit réseau, et
- des moyens (7) de sélection d'un utilisateur appartenant à ladite communauté d'utilisateurs tels que la localisation de cet utilisateur est la plus proche de celle du terminal de l'utilisateur appelant, et
- des moyens (8) de redirection d'appel pour mettre en communication l'utilisateur appelant avec l'utilisateur sélectionné.

## Description

La présente invention concerne un système et un procédé d'alerte dans un réseau de télécommunication, par un utilisateur appelant, d'un utilisateur destinataire appartenant à une communauté d'utilisateurs, cette communauté étant définie par un identifiant d'alerte.

Il est connu des appareils de télécommunications dans lesquels un utilisateur appelant utilise un dispositif spécifique pour enclencher la numérotation téléphonique correspondant à un interlocuteur particulier afin d'alerter celui-ci d'un incident. Ces systèmes sont utilisés dans le cadre d'un réseau de téléphonie fixe par des personnes âgées ou handicapées, installées à domicile, pour alerter des services d'urgence (SAMU, pompiers...). Ils se présentent sous la forme d'un objet ayant un unique bouton et qui se porte sur la personne, ou bien sous la forme d'un bouton bien singularisé d'un clavier de téléphone fixe ou portable.

Ce type de système a pour inconvénient de n'être pas utilisable hors du domicile de l'utilisateur, par exemple lors d'un déplacement.

Un autre inconvénient est la limitation de l'appel à un seul numéro, ou à quelques numéros pour les appareils les plus sophistiqués. Dans ce dernier cas, les numéros sont composés successivement jusqu'à ce que l'un d'entre eux décroche. Cet ordre de numérotation est établi de façon rigide durant l'initialisation de l'appareil. Si les premiers appelés sur la liste sont indisponibles, un temps précieux est perdu par le système pour essayer de les joindre.

Le but de l'invention est de proposer un système d'alerte, et un procédé associé, n'ayant pas ces inconvénients et donc utilisable dans le cadre de tout type de réseau d'accès (fixe, mobile, Internet) pour joindre l'interlocuteur le plus pertinent d'une liste d'interlocuteurs.

L'objet de l'invention est donc un système d'alerte, dans un réseau de télécommunication, par un utilisateur appelant, d'un utilisateur destinataire appartenant à une communauté d'utilisateurs, ladite communauté étant définie par un identifiant d'alerte, et ledit système comportant :
- un terminal de télécommunication appartenant à l'utilisateur appelant et comportant des moyens de génération d'une requête de communication comportant ledit identifiant d'alerte,
- un serveur de joignabilité connecté au réseau de télécommunication de telle sorte que les demandes de communication comportant l'identifiant d'alerte sont dirigées vers ledit serveur de joignabilité, et ledit serveur de joignabilité comportant :

- des moyens de communication avec le réseau de télécommunication pour recevoir les coordonnées de localisation des terminaux connectés audit réseau, et
- des moyens de sélection d'un utilisateur appartenant à ladite communauté d'utilisateurs tels que la localisation de cet utilisateur est la plus proche de celle du terminal de l'utilisateur appelant, et
- des moyens de redirection d'appel pour mettre en communication l'utilisateur appelant avec l'utilisateur sélectionné.

Le système d'alerte permet ainsi, avantageusement de sélectionner l'utilisateur destinataire le plus proche, géographiquement ou temporellement, de l'utilisateur appelant, quelque soit la localisation de ce dernier. En particulier, l'utilisateur appelant peut ainsi utiliser avantageusement le système d'alerte à l'extérieur de son domicile, en déplacement.

D'autres caractéristiques sont :
- le système comporte en outre un serveur de listes connecté audit serveur de joignabilité, ledit serveur de listes comportant des moyens de stockage de la liste des utilisateurs appartenant à la communauté et des données de disponibilité, et les moyens de sélection du serveur de joignabilité sont adaptés pour que ladite sélection ne porte que sur les utilisateurs déclarés disponibles à l'instant de génération de la requête de communication ;
- le système comporte en outre un serveur de présence, connecté audit serveur de joignabilité, ledit serveur de présence permettant la modification des données de disponibilité par les utilisateurs de la communauté d'utilisateurs ;
- au moins un des utilisateurs est mobile ;
- le serveur de joignabilité comporte en outre des moyens d'envoi d'un message d'informations à tous les utilisateurs non sélectionnés de la communauté d'utilisateur ; et
- lesdits moyens de génération sont activables au moyen d'une touche prédéterminée dudit terminal.

Un autre objet de l'invention est un procédé d'alerte, dans un réseau de télécommunication, par un utilisateur appelant, d'un utilisateur destinataire appartenant à une communauté d'utilisateurs, ladite communauté étant définie par un identifiant d'alerte, et ledit procédé comportant les étapes de :
a) réception par un serveur de joignabilité connecté au réseau de télécommunication d'une requête de communication comportant ledit identifiant d'alerte, ladite requête étant générée par l'intermédiaire d'un terminal de télécommunication appartenant à l'utilisateur appelant,
b) détermination des coordonnées de localisation du terminal de communication de l'utilisateur appelant,
c) sélection d'un utilisateur appartenant à ladite communauté d'utilisateurs tels que la localisation de cet utilisateur est la plus proche de celle du terminal de l'utilisateur appelant, et
d) redirection de la requête de communication pour mettre en communication l'utilisateur appelant avec l'utilisateur sélectionné.

D'autres caractéristiques de ce procédé sont :
- il comporte une étape préalable de stockage de la liste des utilisateurs appartenant à la communauté et de données de disponibilité, et la sélection ne porte que sur les utilisateurs déclarés disponibles à l'instant de génération de la requête de communication ;
- les données de disponibilité sont modifiables par les utilisateurs de la communauté d'utilisateurs ;
- suite à l'étape d), il comporte en outre une étape d'émission d'un message à destination des utilisateurs non sélectionnés de la communauté d'utilisateurs, ledit message comportant au moins les informations sur l'utilisateur appelant, l'utilisateur sélectionné et leur localisation respective ; et
- la requête est générée sur activation d'une touche prédéterminée du terminal de télécommunication appartenant à l'utilisateur appelant.

Un autre objet de l'invention est un programme d'ordinateur comprenant des instructions de code de programme pour l'exécution des étapes du procédé lorsque ledit programme est exécuté sur un ordinateur.

Un autre objet de l'invention est un serveur de joignabilité, caractérisé en ce qu'il est connecté à un réseau de télécommunication de telle sorte que des demandes de communication comportant un identifiant d'alerte définissant une communauté d'utilisateurs sont dirigées vers ledit serveur de joignabilité, et en ce qu'il comporte :
- des moyens de communication avec le réseau de télécommunication pour recevoir les coordonnées de localisation des terminaux connectés audit réseau, et
- des moyens de sélection d'un utilisateur appartenant à ladite communauté d'utilisateurs tels que la localisation de cet utilisateur est la plus proche de celle d'un terminal d'un utilisateur appelant ayant généré une requête de communication comportant ledit identifiant d'alerte, et
- des moyens de redirection d'appel pour mettre en communication l'utilisateur appelant avec l'utilisateur sélectionné.

Un autre objet de l'invention est un produit programme d'ordinateur mis en oeuvre par le serveur de joignabilité comprenant des instructions de code de programme pour l'exécution des étapes suivantes :
- recevoir les coordonnées de localisation des terminaux connectés audit réseau, et
- sélectionner un utilisateur appartenant à ladite communauté d'utilisateurs tels que la localisation de cet utilisateur est la plus proche de celle d'un terminal d'un utilisateur appelant ayant généré une requête de communication comportant ledit identifiant d'alerte, et
- rediriger l'appel pour mettre en communication l'utilisateur appelant avec l'utilisateur sélectionné.

Ainsi, très avantageusement, l'interlocuteur qui est appelé en priorité est celui qui est disponible et, par exemple, le plus proche, géographiquement ou temporellement, de l'utilisateur appelant ce qui permet, en cas d'urgence, une intervention rapide.

De plus, seuls les interlocuteurs disponibles étant appelés, le système est plus efficace et sans perte de temps.

La disponibilité des utilisateurs de la communauté pouvant être mise à jour par ceux-ci, le système d'alerte gagne en flexibilité.

De plus, l'envoi de messages offre avantageusement aux membres de la communauté une information immédiate leur permettant d'être informés et éventuellement d'intervenir spécifiquement en dehors des règles et critères de sélection, augmentant encore la flexibilité

L'invention sera mieux comprise à la lecture de la description qui va suivre, faite uniquement à titre d'exemple et en relation avec les dessins en annexe dans lesquels :
- la figure 1 est un schéma synoptique d'un mode de réalisation d'un système selon l'invention ;
- la figure 2 est un ordinogramme d'un mode de réalisation du procédé selon l'invention ;
- la figure 3 est un schéma synoptique d'une première variante de réalisation d'un système selon l'invention ;
- la figure 4 est un ordinogramme pour une variante de réalisation du procédé correspondant au système de la figure 3 ;
- la figure 5 est un schéma synoptique d'une seconde variante de réalisation d'un système selon l'invention ; et
- la figure 6 est un ordinogramme pour une variante du procédé correspondant au système de la figure 5.

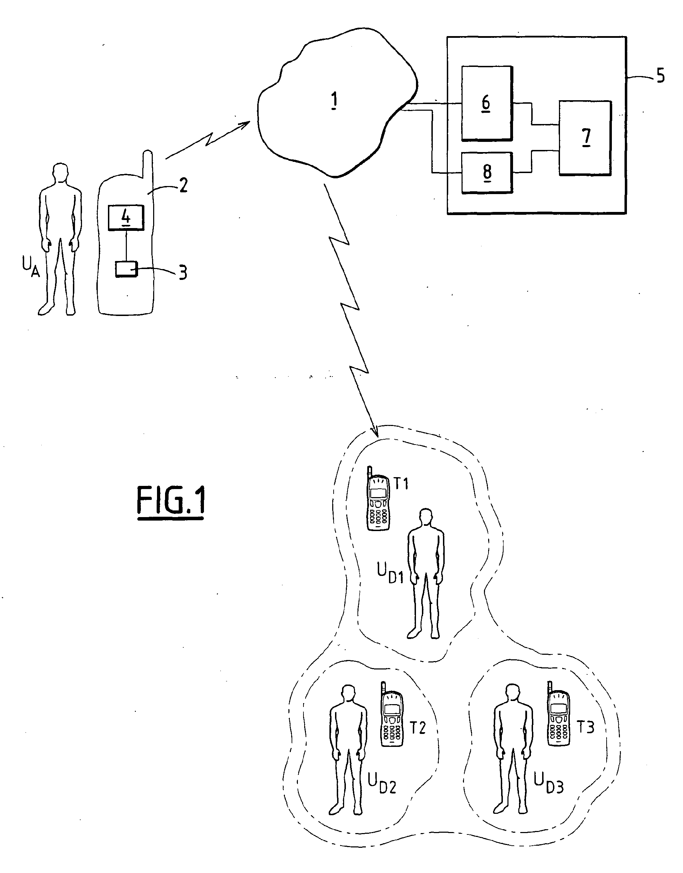

En référence à la figure 1, un système d'alerte dans un réseau 1 de télécommunications comporte un terminal de télécommunication 2 appartenant à un utilisateur U_{A}.

A titre d'exemple, cet utilisateur U_{A} est une personne âgée abonnée à un service de soins et utilisant un terminal mobile 2.

Cet utilisateur U_{A} est mobile dans le sens où il ne reste pas en permanence à son domicile.

Le terminal mobile 2, que l'utilisateur U_{A} porte en permanence avec lui, comporte une touche 3. L'appui sur cette touche 3 par l'utilisateur U_{A} active des moyens 4 de génération d'une requête de communication comportant un identifiant d'alerte. Par exemple, l'appui sur la touche 3 enclenche l'envoi d'une requête avec l'identifiant d'alerte. Cet identifiant d'alerte a été, par exemple, stocké dans le terminal mobile 2 lors d'une phase d'initialisation effectuée quand l'utilisateur U_{A} s'est abonné au service de soins.

Le service de soins est assuré par une communauté d'utilisateurs U_{D1}, U_{D2}, U_{D3}.

Chacun de ces utilisateurs U_{D1}, U_{D2}, U_{D3} possède un terminal mobile T₁, T₂, T₃ relié au réseau de télécommunications 1.

L'identifiant d'alerte du service, qui est l'un des éléments du paramétrage du service, est un identifiant réservé distinct des identités de l'ensemble des utilisateurs.

Cette communauté d'utilisateurs U_{D1}, U_{D2}, U_{D3} regroupe, par exemple, l'ensemble des médecins généralistes/infirmiers d'une ville.

Le système d'alerte comporte un serveur de joignabilité 5 connecté au réseau 1 de télécommunications. L'identifiant d'accès de ce serveur 5 de joignabilité correspond à l'identifiant d'alerte paramétré dans le terminal mobile 2 de façon à ce que le réseau 1 de télécommunication dirige la requête de communication du terminal mobile 2 vers le serveur de joignabilité 5.

Le serveur de joignabilité 5 comporte des moyens 6 de communication avec le réseau 1 tels que le serveur de joignabilité reçoit les coordonnées de localisation d'un terminal connecté à ce réseau.

Il est bien connu de l'homme du métier que les réseaux de communication, fixes et mobiles, actuels comportent des serveurs de localisation capables de déterminer les coordonnées de localisation de tout terminal connecté à ces réseaux. Ainsi, pour les terminaux mobiles, selon la précision souhaitée, cette localisation peut se limiter à déterminer la zone géographique correspondant à la couverture de la station de base à laquelle est connecté le terminal mobile, ou bien utiliser des méthodes de triangulation en utilisant les signaux émis par le téléphone mobile avec sa station de base de rattachement et les stations de base adjacentes. Pour les réseaux fixes, l'information de localisation est en général fournie par traduction de l'identifiant de la ligne.

Les moyens 6 envoient des requêtes de localisation au serveur de localisation du réseau 1, requête comportant le numéro d'accès du terminal à localiser, et reçoivent en retour une réponse comportant la localisation de ce terminal, à condition que celui-ci soit connecté au réseau 1. L'information de localisation de l'appelant peut aussi être automatiquement transmise par le serveur de localisation du réseau 1 dans la requête initiale envoyée au serveur 5 de joignabilité et donc reçue par les moyens 6.

Le serveur 5 de joignabilité comporte des moyens 7 de sélection d'un utilisateur U_{D1} appartenant à la communauté des utilisateurs U_{D1}, U_{D2}, U_{D3}.

Le critère de sélection de cet utilisateur U_{D1} est sa proximité avec l'utilisateur appelant U_{A}. Par proximité, on entend soit la proximité géographique, c'est-à-dire la distance la plus courte entre l'utilisateur appelant U_{A} et l'utilisateur à sélectionner, soit la proximité temporelle correspondant au temps nécessaire à l'utilisateur à sélectionner pour rejoindre l'utilisateur appelant U_{A}.

Le serveur 5 de joignabilité comporte en outre des moyens 8 de redirection d'appels, connectés aux moyens 7 de sélection, pour mettre en communication l'utilisateur appelant U_{A} avec l'utilisateur destinataire sélectionné U_{D1}, cette communication étant, de façon préférentielle, de type multimédia.

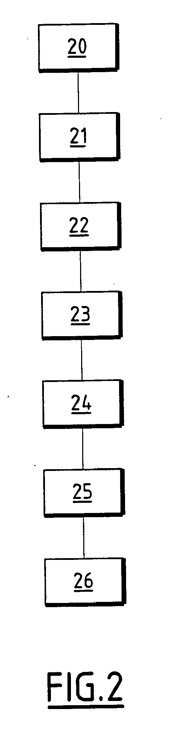

Le fonctionnement de ce système d'alerte va être expliqué en relation avec la figure 2.

L'utilisateur appelant U_{A} appuie en 20 sur le bouton d'appel 3, ce qui active les moyens 4 de génération d'une requête de communication.

Ceux-ci émettent en 21 une requête de communication comportant au moins l'identifiant d'alerte et l'identifiant de l'appelant U_{A}.

Cette requête est dirigée en 22 par le réseau 1 de télécommunication vers le serveur 5 de joignabilité.

A réception de cette requête, le serveur 5 de joignabilité détermine en 23 les coordonnées de localisation de l'utilisateur appelant U_{A}, ou, plus exactement, de son terminal mobile 2. Cette détermination de la localisation est effectuée par le serveur de localisation du réseau 1 de télécommunication et transmise aux moyens 6 de communication.

Le serveur 5 de joignabilité sélectionne en 24 l'utilisateur U_{D1}, U_{D2}, U_{D3} de la communauté d'utilisateurs qui est le plus proche de l'utilisateur appelant U_{A}. Par exemple, pour une recherche de proximité géographique, le serveur 5 de joignabilité interroge le réseau 1 en utilisant ses moyens 6 de communication pour connaître l'ensemble des coordonnées de localisation des utilisateurs U_{D1}, U_{D2}, U_{D3}, puis il calcule la distance en ligne droite entre l'utilisateur appelant U_{A} et chacun des utilisateurs U_{D1}, U_{D2}, U_{D3} pour sélectionner celui dont la distance est la plus courte. Bien sûr, d'autres méthodes de calcul d'itinéraires bien connues de l'homme du métier sont utilisables, telles que les méthodes de recherche d'itinéraires routiers. Si la proximité recherchée est temporelle, c'est-à-dire que la recherche porte sur l'utilisateur U_{D1}, U_{D2}, U_{D3} pouvant rejoindre le plus rapidement l'utilisateur appelant U_{A}, les méthodes de recherche d'itinéraires et de calcul de temps de parcours sont utilisées. Ces méthodes sont utilisables avec des données de circulation en temps réel permettant d'ajuster les temps de parcours aux conditions réelles de circulation. A titre illustratif, le brevet US 6 539 302 de Bender et al. décrit une telle méthode de calcul.

Ayant déterminé l'utilisateur U_{D1}, U_{D2}, U_{D3} le plus proche, il redirige en 25 la requête de communication vers le téléphone T1 de cet utilisateur. Pour cela, par exemple, il utilise le mécanisme classique de redirection d'appel.

Le réseau 1 de télécommunication établit alors en 26 la communication entre l'utilisateur appelant U_{A} et l'utilisateur U_{D1}. De préférence, cette communication est du type multimédia, par exemple sous forme de visiophonie.

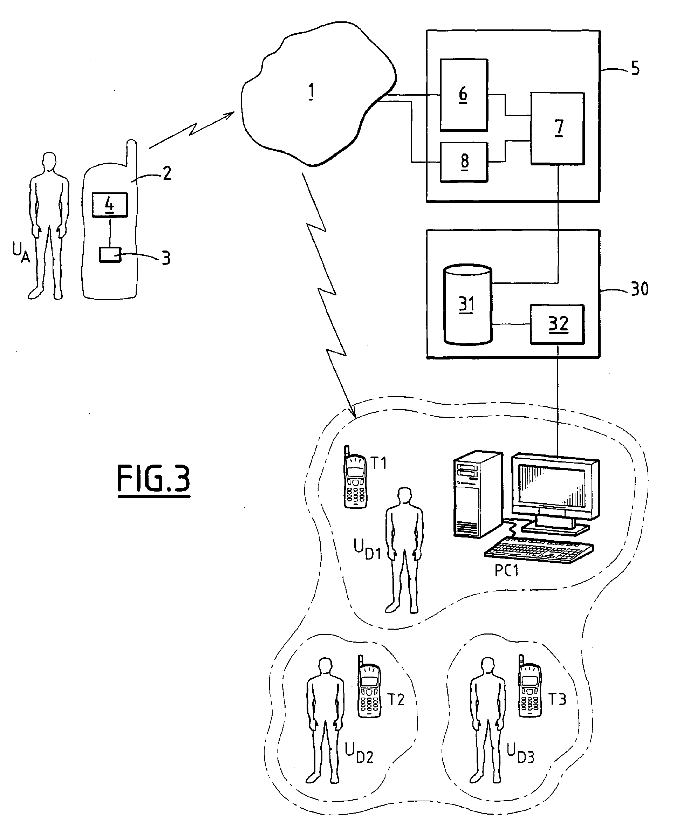

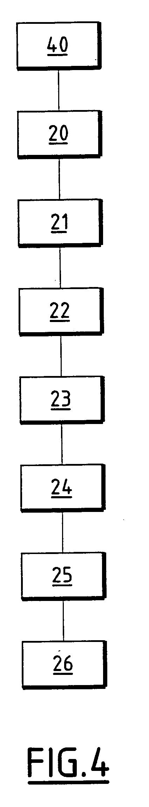

Une variante de réalisation est représentée figures 3 et 4 dans lesquelles les éléments identiques ou similaires portent les mêmes références.

Le système d'alerte comporte en outre un serveur 30 de listes connecté au serveur 5 de joignabilité. Ce serveur 30 de listes comporte des moyens 31 de stockage de la liste des utilisateurs U_{D1}, U_{D2}, U_{D3} de la communauté d'utilisateurs. Pour chaque utilisateur, les moyens 31 de stockage mémorisent la disponibilité de celui-ci.

Dans ce contexte, la disponibilité peut correspondre aux plages horaires ou journalières pendant lesquelles l'utilisateur est disponible pour répondre à un appel en provenance du système d'alerte. Ainsi, dans l'exemple cité précédemment, la communauté des utilisateurs correspondant à l'ensemble des médecins généralistes/infirmiers d'une ville, la disponibilité de ceux-ci correspond aux périodes de garde ou d'astreinte.

Les moyens 7 de sélection sont alors adaptés pour sélectionner l'utilisateur U_{D1} qui est disponible et le plus proche de l'utilisateur appelant U_{A} quand ce dernier appelle.

Dans un mode de réalisation préférentiel, le serveur 30 de listes s'interface avec un serveur 32 de présence qui permet la modification des données de disponibilité par les utilisateurs U_{D1}, U_{D2}, U_{D3} de la communauté d'utilisateurs.

A titre illustratif, l'ordinateur personnel PC₁ de l'utilisateur U_{D1} est connecté au serveur 32 de présence pour que cet utilisateur effectue la mise à jour de sa disponibilité. Les utilisateurs U_{D2} et U_{D3} utilisent leurs terminaux T2 et T3 pour effectuer cette mise à jour.

Les utilisateurs U_{D1}, U_{D2}, U_{D3} ayant stocké en 40 leurs disponibilités dans le serveur 32 de présence, la sélection en 24 ne porte que sur les utilisateurs U_{D1}, U_{D2}, U_{D3} qui se sont déclarés disponibles pour le moment de l'appel.

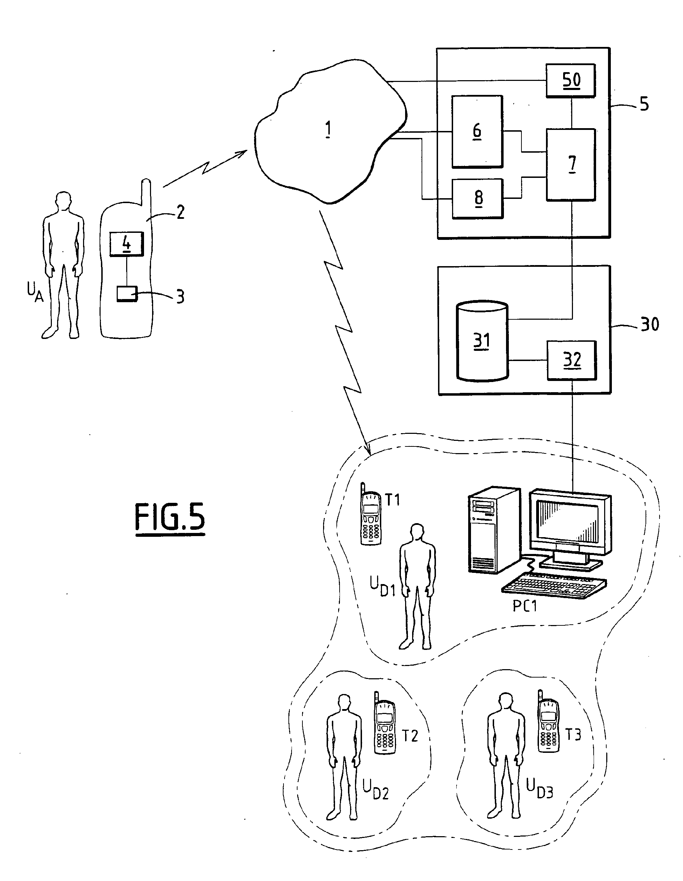

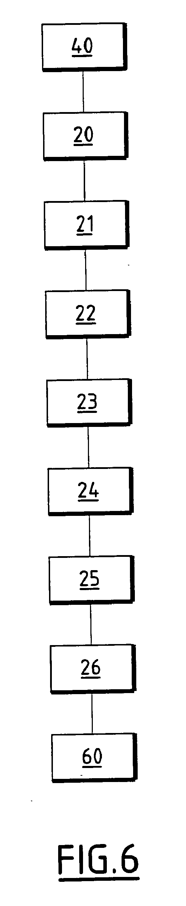

Une seconde variante est illustrée figures 5 et 6 dans lesquelles les éléments identiques ou similaires portent les mêmes références que précédemment.

Le serveur 5 de joignabilité comporte des moyens 50 d'envoi de messages connectés aux moyens 7 de sélection ainsi qu'au réseau 1 de télécommunication.

Le serveur de joignabilité envoie en 60, après la mise en communication de l'utilisateur appelant et de l'utilisateur U_{D1}, un message, par exemple un SMS, aux autres membres de la communauté U_{D2}, U_{D3} pour les prévenir de cette mise en communication. Le message contient au moins des informations sur les deux utilisateurs mis en communication, par exemple leurs identifiants et leur localisation respective.

Il est à noter que cette seconde variante est indépendante de la première variante et peut être réalisée sans que la première variante le soit.

Dans un mode de réalisation préférentiel, le réseau de télécommunication comporte un réseau IMS CORE. Ce réseau est défini par la norme 3GPP TS 23.228 « IP multimédia subsystem (IMS) : stage 2 » (sous-système multimédia IP : niveau 2). Ce réseau centralise et normalise les relations avec et entre les différents services offerts et s'interface à tout type de réseau d'accès (fixe, mobile, Internet). Ainsi, dans le cadre du système d'alerte, toutes les requêtes et réponses précédemment décrites comme partie au réseau de télécommunication sont gérés par ce réseau IMS CORE. Les services sont offerts par des serveurs d'applications comme le serveur de présence et le serveur de joignabilité. Dans le réseau IMS CORE, l'identifiant d'alerte du service fait avantageusement partie des « Public Service Identity ».

On comprend que le procédé d'alerte est exécuté par le serveur de joignabilité, qui est un dispositif informatique, sous la commande d'instructions logicielles d'un programme d'ordinateur. Par conséquent, l'invention concerne également un programme d'ordinateur comportant des instructions logicielles pour faire exécuter le procédé précédemment décrit par le serveur de joignabilité.

## Revendications

1. Système d'alerte, dans un réseau (1) de télécommunication, par un utilisateur appelant (U_{A}), d'un utilisateur destinataire appartenant à une communauté d'utilisateurs (U_{D1}, U_{D2}, U_{D3}), ladite communauté étant définie par un identifiant d'alerte, et ledit système comportant :
- un terminal (2) de télécommunication appartenant à l'utilisateur appelant et comportant des moyens (4) de génération d'une requête de communication comportant ledit identifiant d'alerte,
- un serveur (5) de joignabilité connecté au réseau (1) de télécommunication de telle sorte que les demandes de communication comportant l'identifiant d'alerte sont dirigées vers ledit serveur (5) de joignabilité, et ledit serveur (5) de joignabilité comportant :
- des moyens (6) de communication avec le réseau (1) de télécommunication pour recevoir les coordonnées de localisation des terminaux connectés audit réseau, et
- des moyens (7) de sélection d'un utilisateur appartenant à ladite communauté d'utilisateurs tels que la localisation de cet utilisateur est la plus proche de celle du terminal de l'utilisateur appelant, et
- des moyens (8) de redirection d'appel pour mettre en communication l'utilisateur appelant avec l'utilisateur sélectionné.

2. Système d'alerte selon la revendication 1, **caractérisé en ce qu'**il comporte en outre un serveur (30) de listes connecté audit serveur de joignabilité, ledit serveur de listes comportant des moyens (31) de stockage de la liste des utilisateurs appartenant à la communauté et des données de disponibilité, et **en ce que** les moyens (7) de sélection du serveur (5) de joignabilité sont adaptés pour que ladite sélection ne porte que sur les utilisateurs déclarés disponibles à l'instant de génération de la requête de communication.

3. Système d'alerte selon les revendications 2, **caractérisé en ce qu'**il comporte en outre un serveur (32) de présence, connecté audit serveur (30) de listes, ledit serveur (32) de présence permettant la modification des données de disponibilité par les utilisateurs de la communauté d'utilisateurs.

4. Système d'alerte selon l'une quelconque des revendications précédentes, **caractérisé en ce qu'**au moins un des utilisateurs est mobile.

5. Système d'alerte selon l'une quelconque des revendications précédentes, **caractérisé en ce que** le serveur de joignabilité comporte en outre des moyens (50) d'envoi d'un message d'informations à tous les utilisateurs non sélectionnés de la communauté d'utilisateur.

6. Système d'alerte selon l'une quelconque des revendications 1 à 5, **caractérisé en ce que** lesdits moyens (4) de génération sont activables au moyen d'une touche (3) prédéterminée dudit terminal.

7. Procédé d'alerte, dans un réseau de télécommunication, par un utilisateur appelant, d'un utilisateur destinataire appartenant à une communauté d'utilisateurs, ladite communauté étant définie par un identifiant d'alerte, et ledit procédé comportant les étapes de :
a) réception (22) par un serveur de joignabilité connecté au réseau de télécommunication d'une requête de communication comportant ledit identifiant d'alerte, ladite requête étant générée (21) par l'intermédiaire d'un terminal de télécommunication appartenant à l'utilisateur appelant,
b) détermination (23) des coordonnées de localisation du terminal de télécommunication de l'utilisateur appelant,
c) sélection (24) d'un utilisateur appartenant à ladite communauté d'utilisateurs tels que la localisation de cet utilisateur est la plus proche de celle du terminal de l'utilisateur appelant, et
d) redirection (25) de la requête de communication pour mettre en communication l'utilisateur appelant avec l'utilisateur sélectionné.

8. Procédé d'alerte selon la revendication 7, **caractérisé en ce qu'**il comporte une étape préalable de stockage de la liste des utilisateurs appartenant à la communauté et de données de disponibilité, et **en ce que** la sélection ne porte que sur les utilisateurs déclarés disponibles à l'instant de génération de la requête de communication.

9. Procédé d'alerte selon la revendication 8, **caractérisé en ce que** les données de disponibilité sont modifiables par les utilisateurs de la communauté d'utilisateurs.

10. Procédé d'alerte selon l'une quelconque des revendications 7 à 9, **caractérisé en ce que**, suite à l'étape d), il comporte en outre une étape d'émission d'un message à destination des utilisateurs non sélectionnés de la communauté d'utilisateurs, ledit message comportant au moins les informations sur l'utilisateur appelant, l'utilisateur sélectionné et leur localisation respective.

11. Procédé d'alerte selon l'une quelconque des revendications 7 à 10, **caractérisé en ce que** la requête est générée sur activation (20) d'une touche prédéterminée du terminal de télécommunication appartenant à l'utilisateur appelant.

12. Produit programme d'ordinateur comprenant des instructions de code de programme pour l'exécution des étapes du procédé selon l'une quelconque des revendications 7 à 11 lorsque ledit programme est exécuté sur un ordinateur.

13. Serveur de joignabilité, **caractérisé en ce qu'**il est connecté à un réseau (1) de télécommunication de telle sorte que des demandes de communication comportant un identifiant d'alerte définissant une communauté d'utilisateurs sont dirigées vers ledit serveur (5) de joignabilité, et **en ce qu'**il comporte :
- des moyens (6) de communication avec le réseau (1) de télécommunication pour recevoir les coordonnées de localisation des terminaux connectés audit réseau, et
- des moyens (7) de sélection d'un utilisateur appartenant à ladite communauté d'utilisateurs tels que la localisation de cet utilisateur est la plus proche de celle d'un terminal d'un utilisateur appelant ayant généré une requête de communication comportant ledit identifiant d'alerte, et
- des moyens (8) de redirection d'appel pour mettre en communication l'utilisateur appelant avec l'utilisateur sélectionné.

14. Produit programme d'ordinateur mis en oeuvre dans un serveur selon la revendication 13, comprenant des instructions de code de programme pour l'exécution des étapes suivantes :
- recevoir les coordonnées de localisation des terminaux connectés audit réseau, et
- sélectionner un utilisateur appartenant à ladite communauté d'utilisateurs tels que la localisation de cet utilisateur est la plus proche de celle d'un terminal d'un utilisateur appelant ayant généré une requête de communication comportant ledit identifiant d'alerte, et
- rediriger l'appel pour mettre en communication l'utilisateur appelant avec l'utilisateur sélectionné.
